# EUROPEAN PATENT SPECIFICATION

(11) **EP 1 827 952 B1**
(45) Date of publication and mention of the grant of the patent: **04.11.2009**
(21) Application number: 04809045.0
(22) Date of filing: 13.12.2004
(51) Int. Cl.: B62D 25/14, B62D 65/14, B60K 37/00

(54) **COCKPIT MODULE AND METHOD FOR INSTALLING SAID COCKPIT MODULE IN A VEHICLE BODY**
COCKPIT-MODUL UND VERFAHREN ZUR INSTALLATION DES COCKPIT-MODULS IN EINEM FAHRZEUGAUFBAU
MODULE DE POSTE DE CONDUITE ET PROCEDE D'INSTALLATION DUDIT MODULE DE POSTE DE CONDUITE DANS UN CHASSIS DE VEHICULE

(43) Date of publication of application: 05.09.2007
(73) Proprietor: VOLVO LASTVAGNAR AB, 405 08 Göteborg (SE)
(72) Inventor: PEUCH, Lionel, S-426 75 Västra Frölunda (SE)
(74) Representative: Fröhling, Werner Otto
(86) International application number: PCT/SE2004/001859
(87) International publication number: WO 2006/065173

(56) References cited:
- EP-A1- 1 106 492
- EP-A1- 1 193 161
- US-A- 5 477 603
- US-B1- 6 203 092
- US-B1- 6 354 655

## Description

### TECHNICAL FIELD

The present invention relates to a cockpit module and a method for installing said cockpit module in a vehicle body, and in particular in a cab for a cargo carrying truck. The cockpit module comprises driver interface means such as a steering wheel and a driver information display, and the method comprises use of a carrier frame for carrying the cockpit module during installation.

### BACKGROUND

In modern, efficient production of vehicles, and in this case more particularly a cab for a truck, it is common to assemble sub-assemblies prior to final installation in the vehicle. One such assembly is the cockpit module, which may include driver interface means such as steering wheel and driver displays of various types. Thus, it is well known *per se* to install a pre-assembled cockpit module into the cab.

Normally, the cockpit module comprises an outer shell of a suitable plastic material supported by a metal reinforcement, and is structurally held together by means of an integrated internal frame structure. Traditionally, this internal frame structure includes sheet metal braces and consoles which supports the outer shell and the components within the cockpit modules. The internal frame structure makes the cockpit structurally self-supporting during installation and thus facilitates the handling of it until it is finally installed in the cab. The cockpit module may in this way be carried in a simple mounting jig or carrier frame until it is secured in the vehicle. However, this internal frame structure also adds weight and cost to the cockpit module, which is a disadvantage in modern production. US 6200392 discloses, according to the preamble features of claim 1, such a cockpit module with an integrated internal frame structure. US 5477603 discloses, according to the preamble features of claim 7, an apparatus and a method for installation of an instrument panel with an integrated internal frame structure into a vehicle.

### SUMMARY OF THE INVENTION

The above-mentioned drawback is alleviated by the invention providing a cockpit module in which the internal frame has been eliminated completely. This is achieved by utilizing the strength of at least one structural beam of the vehicle body to support the cockpit module once installed in said vehicle body, so as to eliminate the need for superfluous internal support structures within the cockpit module. In this way, both weight and production cost are saved.

More particularly, the invention discloses a cockpit module for a vehicle body, comprising driver interface means such as a steering wheel and a driver information display. The invention is especially **characterized in that** the cockpit module is substantially non-self-supporting prior to installation in the vehicle body and is adapted to be structurally supported externally at one or more external support surfaces, by at least one structural beam of the vehicle body once installed in said vehicle body.

In an advantageous embodiment of the invention, the cockpit module is adapted to be structurally supported externally by an external carrier frame at one or more further external support surfaces during installation until it is secured to the vehicle body.

In one embodiment, the carrier frame is provided with access openings, the positions of which correspond to predefined points of attachment between the cockpit module and said one or more structural beams of the vehicle body.

In a suitable embodiment, the carrier frame includes one or more sub-frame portions which are movably hinged to the remaining carrier frame for engaging or disengaging the cockpit module.

Preferably, the carrier frame is adjustable to cockpit modules of varying dimensions, by means of one or more telescopic frame sections.

In a suitable embodiment, the vehicle body is a cab for a cargo carrying truck.

The invention also provides a method for installing a cockpit module in a vehicle body, said cockpit module comprising driver interface means such as a steering wheel and a driver information display. The method comprises use of a carrier frame for carrying said cockpit module during installation, said carrier frame being releasably attached to the cockpit module. The method is especially characterized in the steps of:
- attaching said carrier frame as a structural external support for the cockpit module during installation, said cockpit module being substantially non-self supporting prior to completed installation in the vehicle body;
- fastening the cockpit module to the vehicle body in such a way that it is structurally supported externally at one or more external support surfaces, by at least one structural beam of the vehicle body, and
- releasing the carrier frame from the installed cockpit module.

In one embodiment of the invention, the carrier frame is opened or closed for engaging or disengaging the cockpit module, by means of one or more sub-frame portions which are movably hinged to the remaining carrier frame.

Further features and advantages of the invention will be described in the detailed description of embodiments below.

### BRIEF DESCRIPTION OF THE DRAWINGS

The invention will now be described in greater detail by way of example only and with reference to the attached drawings, in which
- Fig. 1: shows a schematic view of a truck cab with a cockpit module according to the invention, being installed by means of an external carrier frame, also according to the invention, and
- Fig. 2: shows a perspective view of a cockpit module carried by an external carrier frame.

### DESCRIPTION OF EXEMPLARY EMBODIMENTS

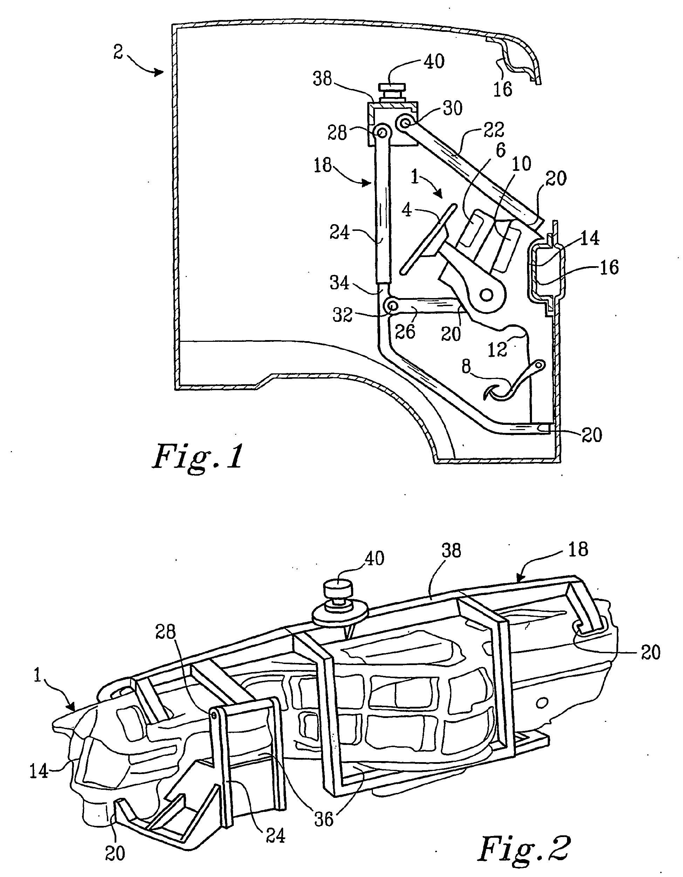

In Fig. 1, reference numeral 1 denotes a cockpit module for a vehicle body 2, here in the form of a cab for a cargo carrying truck (not shown). The vehicle body 2 is in a stripped, so called "body-in-white" condition, with no sub-assemblies yet installed on it. The cockpit module 1 comprises driver interface means such as a steering wheel 4 and a driver information display 6. In the shown exemplary embodiment, the cockpit module further includes a pedal assembly 8 and an electronic control unit 10 for example controlling the suspension characteristics of the vehicle (not shown). Naturally, the cockpit module 1 may include many other units not described herein, but these are not further described since they are well known within the automotive industry and readily apparent for a skilled man in the art. It should be noted that both the cockpit module 1 and the vehicle body 2 is drawn schematically, with many details omitted for the sake of focussing on the present invention.

As shown in Fig. 1, the cockpit module 1 comprises an outer shell 12 of a suitable plastic material. As opposed to known cockpit modules (not shown), the cockpit module 1 of the invention is substantially non-self-supporting prior to installation in the vehicle body 2. The term "substantially non-self-supporting" here simply means that the cockpit module 1 naturally has some stiffness and rigidity due to its design and material characteristics, but it lacks the major internal frame structures including sheet metal braces and consoles (not shown) which - in prior art cockpit modules - supports the outer shell 12 and the components within the cockpit module 1. Instead, according to the present invention, the cockpit module 1 is adapted to be structurally supported externally at one or more external support surfaces 14, by at least one structural beam 16 of the vehicle body 2 once the cockpit module 1 is installed in said vehicle body 2. In this way, the cockpit module 1 according to the invention utilizes the strength of said at least one structural beams 16 - preferably the windshield beam as in this case - to eliminate the need for superfluous internal support structures (not shown) within the cockpit module 1, which saves both weight and production cost in a favorable manner.

Another feature of the present invention is that the non-self-supporting cockpit module 1 is adapted to be structurally supported externally by an external carrier frame 18 at one or more further external support surfaces 20 until it is secured to the vehicle body 2.

The external carrier frame 18 includes one or more sub-frame portions 22, 24, 26 which are movably hinged at pivot axles 28, 30 and 32 respectively, to the remaining carrier frame 18 for engaging or disengaging the cockpit module 1.

In the embodiment shown in Fig. 1, the carrier frame 18 is adjustable to cockpit modules 1 of varying dimensions (only one type shown), by means of one or more extendable telescopic frame sections 34.

As shown in the embodiment of Fig. 2, the carrier frame 18 is provided with access openings 36, the positions of which correspond to predefined points of attachment (not shown since they are on the reverse side) between the cockpit module 1 and said one or more structural beams 16 of the vehicle body 2.

In both shown embodiments, the carrier frame 18 has a longitudinal main beam 38 extending along the cockpit module 1. This longitudinal main beam 38 is provided with one or more lifting interface means 40, allowing the carrier frame 18 to be easily handled in production.

The method according to the invention comprises use of the carrier frame 18 for carrying said cockpit module 1 during installation. The method comprises the steps of:
- attaching said carrier frame 18 as a structural external support for the cockpit module 1 during installation, said cockpit module 1 being substantially non-self - supporting prior to completed installation in the vehicle body 2;
- fastening the cockpit module 1 to the vehicle body 2 in such a way that it is structurally supported externally at one or more external support surfaces 14, by at least one structural beam 16 of the vehicle body 2, and
- releasing the carrier frame 18 from the installed cockpit module 1.

It is to be understood that the invention is by no means limited to the embodiments described above, and may be varied freely within the scope of the appended claims.

### LIST OF REFERENCE NUMERALS

1. Cockpit module
2. Vehicle body
4. Steering wheel
6. Driver display
8. Pedal assembly
10. Electronic control unit
12. Outer shell of cockpit module
14. External support surfaces
16. Structural beam of the vehicle body
18. External carrier frame
20. Further external support surfaces
22. Sub-frame portion
24. Sub-frame portion
26. Sub-frame portion
28. Pivot axle
30. Pivot axle
32. Pivot axle
34. Telescopic frame section
36. Access openings corresponding to predefined points of attachment
38. Longitudinal main beam of carrier frame
40. Lifting interface means

## Claims

1. A cockpit module (1) for a vehicle body (2), comprising driver interface means such as a steering wheel (4) and a driver information display (6), which cockpit module (1) is adapted to be structurally supported externally at one or more external support surfaces (14), by at least one structural beam (16) of the vehicle body (2) once installed in said vehicle body (2), **characterized in that** said cockpit module (1) is substantially non-self-supporting prior to installation in the vehicle body (2).

2. A cockpit module (1) according to claim 1, **characterized in that** it is adapted to be structurally supported externally by an external carrier frame (18) at one or more further external support surfaces (20) during installation until it is secured to the vehicle body (2).

3. A cockpit module (1) according to claim 2, **characterized in that** said carrier frame (18) is provided with access openings (36), the positions of which correspond to predefined points of attachment between the cockpit module (1) and said one or more structural beams (16) of the vehicle body (2).

4. A cockpit module (1) according to claim 2 or 3, **characterized in that** said carrier frame includes one or more sub-frame portions (22, 24, 26) which are movably hinged to the remaining carrier frame (18) for engaging or disengaging the cockpit module (1).

5. A cockpit module (1) according to any of claims 2-4, **characterized in that** the carrier frame (18) is adjustable to cockpit modules (1) of varying dimensions, by means of one or more telescopic frame sections (34).

6. A cockpit module (1) according to any of the previous claims, **characterized in that** said vehicle body (2) is a cab for a cargo carrying truck.

7. Method for installing a cockpit module (1) in a vehicle body (2) according to any of claims 1 to 6, said cockpit module (1) comprising driver interface means such as a steering wheel (4) and a driver information display (6), the method comprising use of a carrier frame (18) for carrying said cockpit module (1) during installation, said carrier frame (18) being releasably attached to the cockpit module (1), **characterized in** the steps of:
- attaching said carrier frame as a structural external support for the cockpit module (1) during installation, said cockpit module (1) being substantially non-self - supporting prior to completed installation in the vehicle body (2);
- fastening the cockpit module (1) to the vehicle body (2) in such a way that it is structurally supported externally at one or more external support surfaces (14), by at least one structural beam (16) of the vehicle body (2), and
- releasing the carrier frame (18) from the installed cockpit module (1).

8. Method according to claim 7, **characterized in that** said carrier frame is opened or closed for engaging or disengaging the cockpit module (1), by means of one or more sub-frame portions which are movably hinged to the remaining carrier frame.

9. Method according to claim 7 or 8, **characterized in that** the carrier frame is adjustable to cockpit modules (1) of varying dimensions, by means of one or more telescopic frame sections.

10. Method according to any of claims 7-9, **characterized in that** said vehicle body (2) is a cab for a cargo carrying truck.

## Patentansprüche

1. Cockpit-Modul (1) für eine Fahrzeugkarosserie (2), mit einer Fahrerschnittstelleneinrichtung, wie einem Lenkrad (4), und einer Fahrerinformationsanzeige (6), wobei das Cockpit-Modul (1) so angepasst ist, das es außen an einer oder mehreren äußeren Halteflächen (14) durch wenigstens einen Konstruktionsträger (16) der Fahrzeugkarosserie (2) konstruktiv gehalten wird, sobald es in die Fahrzeugkarosserie (2) eingebaut ist, **dadurch gekennzeichnet, dass** das Cockpit-Modul (1) vor der Installation in die Fahrzeugkarosserie (2) im Wesentlichen nicht selbsttragend ist.

2. Cockpit-Modul (1) nach Anspruch 1, **dadurch gekennzeichnet, dass** es so angepasst ist, dass es während der Installation außen durch einen äußeren Trägerrahmen (18) an einer oder mehreren äußeren Halteflächen (20) konstruktiv gehalten wird, bis es an der Fahrzeugkarosserie (2) befestigt ist.

3. Cockpit-Modul (1) nach Anspruch 2, **dadurch gekennzeichnet, dass** der Trägerrahmen (18) mit Zugangsöffnungen (36) versehen ist, deren Positionen vorherbestimmten Anbringungsstellen zwischen dem Cockpit-Modul (1) und dem einen oder mehreren Konstruktionsträgern (16) der Fahrzeugkarosserie (2) entsprechen.

4. Cockpit-Modul (1) nach Anspruch 2 oder 3, **dadurch gekennzeichnet, dass** der Trägerrahmen einen oder mehrere Nebenrahmenabschnitte (22, 24, 26) aufweist, die bewegbar an dem restlichen Trägerrahmen (18) angelenkt sind, um mit dem Cockpit-Modul (1) in Eingriff oder außer Eingriff von ihm zu kommen.

5. Cockpit-Modul (1) nach einem der Ansprüche 2 bis 4, **dadurch gekennzeichnet, dass** der Trägerrahmen (18) auf Cockpit-Module (1) verschiedener Dimensionen mittels einer oder mehrerer Teleskoprahmenabschnitte (34) einstellbar ist.

6. Cockpit-Modul (1) nach einem der vorhergehenden Ansprüche, **dadurch gekennzeichnet, dass** die Fahrzeugkarosserie (2) eine Kabine für einen frachttragenden Lastwagen ist.

7. Verfahren zur Installation eines Cockpit-Moduls (1) in einer Fahrzeugkarosserie (2) nach einem der Ansprüche 1 bis 6, wobei das Cockpit-Modul (1) eine Fahrerschnittstelleneinrichtung, wie ein Lenkrad (4), und eine Fahrerinformationsanzeige (6) aufweist, wobei das Verfahren die Verwendung eines Trägerrahmens (18) für ein Tragen des Cockpit-Moduls (1) während der Installation umfasst, wobei der Trägerrahmen (18) lösbar an dem Cockpit-Modul (1) angebracht ist, **gekennzeichnet durch** die Schritte
- Anbringung des Trägerrahmens als konstruktive äußere Halterung für das Cockpit-Modul (1) während der Installation, wobei das Cockpit-Modul (1) vor der vollständigen Installation in der Fahrzeugkarosserie (2) im Wesentlichen nicht tragend ist,
- Befestigung des Cockpit-Moduls (1) an der Fahrzeugkarosserie (2) derart, dass es außen konstruktiv an einer oder mehreren äußeren Halteflächen (14) **durch** wenigstens einen Konstruktionsträger (16) der Fahrzeugkarosserie (2) gehalten wird, und
- Lösen des Trägerrahmens (18) von dem installierten Cockpit-Modul (1).

8. Verfahren nach Anspruch 7, **dadurch gekennzeichnet, dass** der Trägerrahmen mittels einer oder mehrerer Nebenrahmenabschnitte, die bewegbar an dem restlichen Trägerrahmen angelenkt sind, geöffnet oder geschlossen wird, um mit dem Cockpit-Modul (1) in Eingriff und außer Eingriff von ihm zu kommen.

9. Verfahren nach Anspruch 7 oder 8, **dadurch gekennzeichnet, dass** der Trägerrahmen auf Cockpit-Module (1) mittels einer oder mehrerer Teleskoprahmenabschnitte einstellbar ist.

10. Verfahren nach einem der Ansprüche 7 bis 9, **dadurch gekennzeichnet, dass** die Fahrzeugkarosserie (2) eine Kabine für einen frachttragenden Lastwagen ist.

## Revendications

1. Module de poste de conduite (1) destiné à un châssis de véhicule (2), comportant des éléments d'interface de conducteur tels qu'un volant (4) et un écran d'affichage d'informations (6), lequel module de poste de conduite (1) est conçu pour être supporté structurellement de façon extérieure sur une ou plusieurs surfaces de support extérieures (14), par au moins une poutre structurelle (16) du châssis du véhicule (2) après installation dans ledit châssis (2), **caractérisé en ce que** ledit module de poste de conduite (1) n'est globalement pas autoporteur avant installation dans le châssis de véhicule (2).

2. Module de poste de conduite (1) selon la revendication 1, **caractérisé en ce qu'**il est adapté pour être supporté structurellement de façon extérieure par un cadre de support extérieur (18) sur une ou plusieurs surfaces support extérieures supplémentaires (20) lors de son installation, jusqu'à ce qu'il soit fixé au châssis du véhicule (2).

3. Module de poste de conduite (1) selon la revendication 2, **caractérisé en ce que** ledit cadre de support extérieur (18) est muni d'ouvertures d'accès (36), dont les positions correspondent à des points de fixation prédéfinis entre le module de poste de conduite (1) et lesdites une ou plusieurs poutres structurelles (16) du châssis du véhicule (2).

4. Module de poste de conduite (1) selon la revendication 2 ou 3, **caractérisé en ce que** ledit cadre de support extérieur comprend une ou plusieurs parties de sous-cadre (22, 24, 26) qui sont articulées de manière mobile au cadre de support restant (18) pour mettre en prise ou libérer le module de poste de conduite (1).

5. Module de poste de conduite (1) selon l'une quelconque des revendications 2 à 4, **caractérisé en ce que** le cadre de support (18) est ajustable à des modules de poste de conduite (1) de dimensions variables, par l'intermédiaire d'une ou de plusieurs parties de cadre télescopiques (34).

6. Module de poste de conduite (1) selon l'une quelconque des revendications précédentes, **caractérisé en ce que** le châssis de véhicule (2) est une cabine de poids lourd.

7. Procédé d'installation d'un module de poste de conduite (1) dans un châssis de véhicule (2) selon l'une quelconque des revendications 1 à 6, ledit module de poste de conduite (1) comportant des éléments d'interface de conducteur tels qu'un volant (4) et un écran d'affichage d'informations (6), le procédé comprenant l'utilisation d'un cadre de support (18) pour transporter ledit module de poste de conduite (1) pendant l'installation, ledit cadre de support (18) étant fixé de manière libérable au module de poste de conduite (1), **caractérisé en ce qu'**il comprend les étapes consistant à :
- accrocher ledit cadre de support tel qu'un support externe structurel pour le module de poste de conduite (1) pendant installation, ledit module de poste de conduite (1) n'étant globalement pas autoporteur avant installation dans le châssis de véhicule (2) ;
- fixer le module de poste de conduite (1) sur le châssis de véhicule (2) de telle manière qu'il est supporté structurellement de façon extérieure sur une ou plusieurs surfaces de support extérieures (14), par au moins une poutre structurelle (16) du châssis du véhicule (2), et
- libérer le cadre de support (18) du module de poste de conduite installé (1).

8. Procédé selon la revendication 7, **caractérisé en ce que** ledit cadre de support est ouvert ou fermé pour mettre en prise ou libérer le module de poste de conduite (1), par l'intermédiaire d'une ou de plusieurs parties de sous-cadre qui sont articulées de manière mobile sur le cadre de support restant.

9. Procédé selon la revendication 7 ou 8, **caractérisé en ce que** le cadre de support est ajustable à des modules de poste de conduite (1) de dimensions variables, par l'intermédiaire d'une ou de plusieurs parties de cadre télescopiques.

10. Procédé selon l'une quelconque des revendications 7 à 9, **caractérisé en ce que** ledit châssis de véhicule (2) est une cabine de poids lourd.
